# EUROPEAN PATENT SPECIFICATION

(11) **EP 1 280 682 B1**
(45) Date of publication and mention of the grant of the patent: **05.01.2005**
(21) Application number: 01921679.5
(22) Date of filing: 12.04.2001
(51) Int. Cl.: B60R 16/02

(54) **DEVICE FOR WARNING DRIVERS OF AUTOMOBILES OF EXCESSIVE SPEED OF TURNING AROUND A CURVE**
KRAFTFAHRZEUG- FAHRERWARNVORRICHTUNG FÜR ÜBERMÄSSIGE KURVENGESCHWINDIGKEIT
DISPOSITIF POUR SIGNALER AUX CONDUCTEURS D'AUTOMOBILES UNE VITESSE EXCESSIVE DANS UN VIRAGE

(30) Priority: 14.04.2000 GR 2000100129
(43) Date of publication of application: 05.02.2003
(73) Proprietor: Veziris, Spyros, 151 25 Amarousion (GR)
(72) Inventor: Veziris, Spyros, 151 25 Amarousion (GR)
(86) International application number: PCT/GR2001/000020
(87) International publication number: WO 2001/079033

(56) References cited:
- DE-A- 3 434 689
- US-A- 4 592 565
- US-A- 5 529 153

## Description

### FIELD OF THE INVENTION

The present invention relates generally to the art of automobile vehicles and more particularly to an autonomous, compact device which may be calibrated and adjust to alternative road conditions and which emits an audio and/or visual signal for warning the driver of the vehicle of excessive speed of turning around a curve, so that he may timely and securely react and adjust the speed of the vehicle within safe limits, thereby avoiding possible overturning of the vehicle.

### BACKGROUND OF THE INVENTION

When a vehicle moves around a curve, it becomes subject to a possibility of skidding or overturning, depending on a variety of conditions, such as, first of all the speed of the vehicle, which is the main and only parameter that can be changed by the driver of the vehicle if he gets a timely warning that this parameter tends to exceed safe limits. As known from physics, the centrifugal force, which is the cause for the development of an overturning moment, is dependent on the square of the speed of the vehicle. It is also dependent on the radius of curvature, the slope of the road surface and the combination of road and weather conditions.

The possibility that a vehicle moves in a succession of right and left turns, which leads to alternative compression and decompression of the shock absorbers of the vehicle's suspension system further enhances possibilities of overturning, but also of the driver loosing control of the vehicle.

Prior art approaches to alleviation of the problem of monitoring an impeding overturning condition when the vehicle moves around a curve generally related to sensor means which, when an alarm condition was monitored, activated automatic operations, such as effecting reduction of available power or even shutting off the motor of the vehicle without any action being taken by the driver. An example of such a device is described by Lengd. Agric. Inst. in SU-816849-A.

The above approach is however considered inappropriate for experienced drivers, who dislike leaving control of their car to automatically activated systems. Moreover such automatically activated systems are highly complicated and costly.

The alternative prior art approaches relate to devices that aim at providing a warning to the driver of the vehicle, so that he may take remedial measures. Such devices as by way of example disclosed by Anton Ellinghaus in DE-4342732-A or by J.A. Sanner in US-4.952.908-A (disclosing all features of the preamble of claim 1) relate to tractor-trailer vehicles, wherein the device is split in two parts, one sensing means mounted on the trailer and coupled to alarm means mounted on the tractor. The above sensing means in US-4.952.908-A is proposed to include a pair of angular mounted normally open mercury switches arranged to detect lateral forces to the right or left to a degree conducive to roll-over. The device proposed by Johns et al in US-3.778.763-A is also split in two parts, wherein one part is the sensing means and the other part the means for emitting a visual or audible alarm, positioned in the drive compartment of the vehicle. The sensing means in Johns et al also employs a mercury switch sensing device, having a U shaped mercury structure, which senses tilting movements of the vehicle.

Whilst the above devices are aimed to activating the driver in taking remedial measures, so as to return the vehicle in safe course, they are powered by the battery of the vehicle and they become unreliable due to their split configuration and therefore the need of transferring the signal from the sensing means to the means for emitting a visual and/or audible alarm.

Furthermore, none of the devices of the prior art, which operate so as to provide a warning to the driver of the vehicle and leave to him taking the remedial measures, includes appropriate means for calibration of the sensing device, so that a single make of the device may be adjusted into the combination of performance characteristics of different motor cars and into the particular driving habits and skills of individual drivers. It therefore follows that due to varying vehicle performance characteristics and driving habits of individual drivers, devices of the prior art may fail in producing a timely warning, appropriate to the above mentioned changing conditions.

Devices of the prior art also fail to provide means for adjusting the operation thereof to changing operating conditions, and in particular to changing road conditions as such conditions arise in the variation between dry and wet road surface.

The object of the present invention is to effectively overcome the abovementioned shortcomings of the prior art by providing a device for warning drivers of automobiles of excessive speed of turning around a curve, so that they may be alerted in taking remedial measures, wherein the device is characterized by being autonomous, compact and self powered, achieving low cost and trouble free reliable operation, wherein sensing of excessive speed in right or left turns is being monitored by a first pair of oppositely inclined mercury switches.

Another object of the invention is to propose the device with means for adjusting the operation thereof to changing operating conditions in dry or wet road surface, this means being an additional, accordingly calibrated second pair of oppositely inclined mercury switches, wherein in use the device may be alternatively set to operate with either the above mentioned first or second pair of oppositely inclined mercury switches,. so as to appropriately adjust to operation in dry or wet road surface.

Another object of the invention is to propose a device with varying response sensitivity and calibrating means of the sensing device, so that it may be adjusted into the combination of varying performance characteristics of different motor cars and into the varying particular driving habits and skills of individual drivers.

Still a further object of the invention is to provide for the device to be alternatively mounted onto the driving panel or embodied into a suitable location thereof or mounted onto the windscreen, wherein the device is advantageously provided with a housing divided in portions, so that it may be fixedly mounted, whilst assuming the desired horizontal orientation.

### BRIEF DESCRIPTION OF THE DRAWINGS

The invention will now be described by reference to the accompanying drawings, wherein it is being described by means of preferred illustrative embodiments.

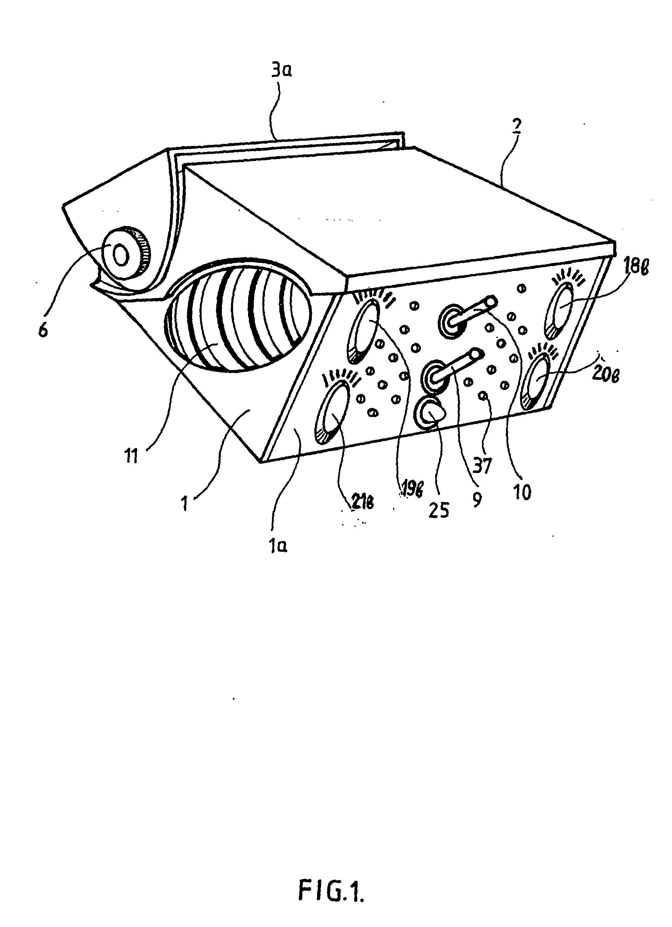

Fig. 1 slows a perspective view of the ready to use device of the invention.
Fig. 2 shows a perspective view of the independent portions of the housing of the device of the invention.
Fig. 3 shows a perspective view of the interior of the device and the parts thereof.
Fig. 4 shows a preferred configuration for the electric circuit selected for the operation of the device.
Fig. 5 shows a side view of the calibrating device used in regulating the mercury switches of the device to varying response sensitivity.
Fig. 6 shows a frontal view of the calibrating device depicted in Fig. 5.

### DETAILED DESCRIPTION OF PREFERRED EMBODIMENTS

In accordance to a preferred embodiment, the operating panel of the device of the invention is a rectangular frontal panel surface 1a which constitutes the frontal view of the device and extends to a perpendicularly projecting basement 1b of the housing of the device. The frontal surface 1a is provided with a plurality of holes 37 allowing transmission of the sound of alarm emitted from the interior of the device.

The arrangement of the device used for sensing possible excessive speed of turning around a curve comprises a first pair of mercury switches 18, 19 and a second pair of mercury switches 20,21. Each one of the abovementioned switches comprises a cylindrical tube within which is freely reciprocatingly moving a mercury bulb. This cylindrical tube is mounted within a lateral cavity of a cylindrical carrier means 18a, 19a, 20a and 21a respectively. Whilst the abovementioned mercury switches and corresponding carrier means are mounted onto the rear surface of the frontal panel surface 1a, each of the carrier means extends into a rotatable Knob 18b, 19b, 20b and 21b respectively on the frontal panel surface 1a. Knobs 18b, 19b, 20b and 21b are used in the calibration procedure of the device, during which each knob and corresponding carrier means is rotated so as to bring each corresponding mercury switch to a desired inclination, so as to define response sensitivity of the device, i.e. to define the conditions under which the speed of the vehicle is considered excessive and beyond the safe limits when the vehicle is about to turn around a curve.

Whilst mercury switches 18 and 20 located on the one side of the frontal panel surface 1a are inclined in one direction, so as to monitor right turns of the vehicle, by corresponding rotation of knobs 18b and 20b in a clockwise direction, mercury switches 19 and 21 located on the other side of the frontal panel surface 1a are inclined in the opposite direction, so as to monitor left turns of the vehicle, by corresponding rotation of knobs 19b and 21b in an anticlockwise direction.

The first abovementioned pair of mercury switches 18 and 19 are selected to operate in conditions of dry road surfaces, whilst the second abovementioned pair of mercury switches 20,21 are alternatively selected to operate in conditions of wet road surfaces. In this respect, it is evident that the abovementioned two pairs of mercury switches are differentially calibrated by being rotated to differentiated inclinations, corresponding to differentiated response sensitivity for driving in conditions of dry or wet road surfaces.

Such alternative activation of the first or second abovementioned pair of mercury switches is in accordance to a preferred embodiment of the invention implemented by means of a manually operated switch with an operation lever 9 on the frontal panel surface 1a and a switch box 9a at the rear of the frontal panel surface 1a. However, in accordance to an alternative preferred embodiment of the invention such alternative activation of the first or second abovementioned pair of mercury switches may be effected automatically upon changing of the conditions of the road surface, by way of example in response to activation of the windscreen wipers.

In accordance to a preferred embodiment of the invention, the frontal panel surface 1a is additionally provided with a switch lever 10 corresponding to a switch box 10a at the rear of the frontal panel surface 1a. The switch lever 10 is used to desirably set the device on or off. An indicator lamp 25 is also preferably mounted onto the frontal panel surface 1a to provide a visual signal of the warning device.

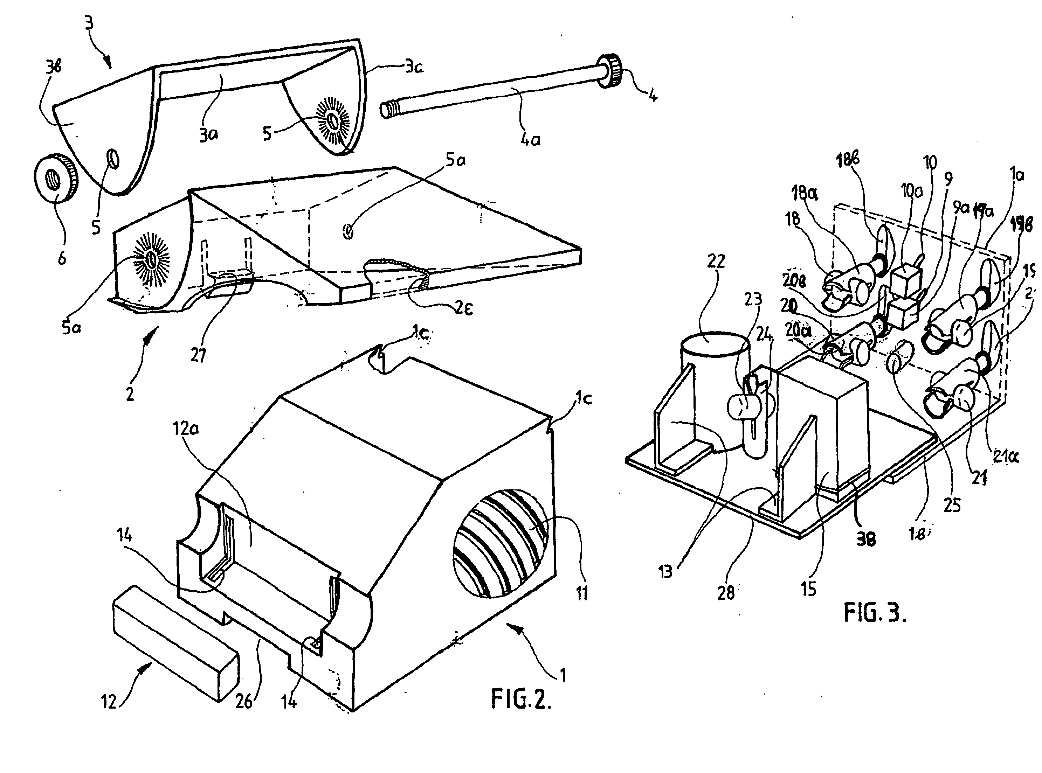

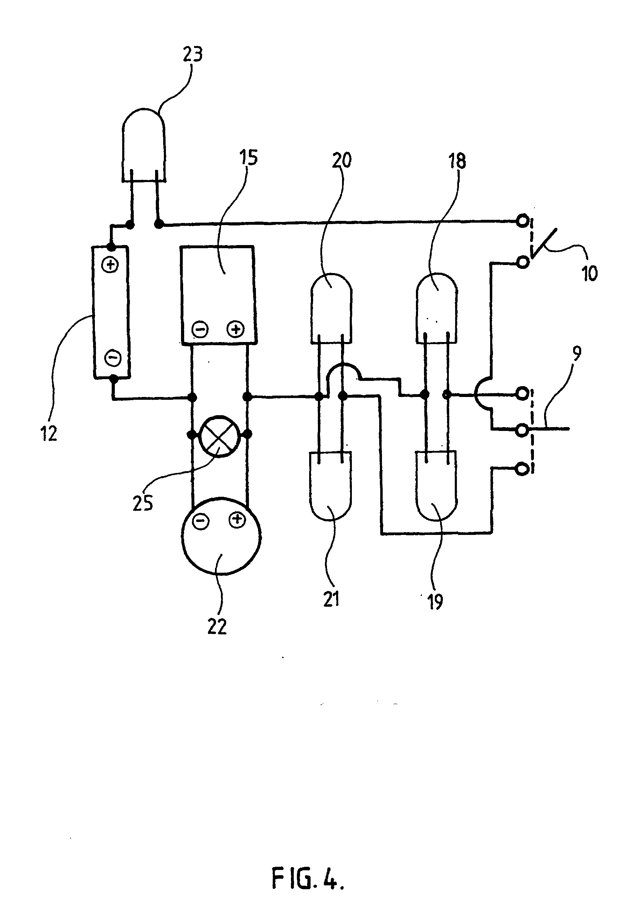

As shown in Fig. 3, the device of the invention includes a rectangular basement 28 onto which are mounted and appropriately wired on the bottom of the basement 28, so as to operate in accordance with the electrical diagram of Fig. 4, the alarm audio signal producing buzzer means 15, which sits upon a vibration absorbing elastic plate 38, a capacitor 22 and a mercury switch 23 mounted upon a vertically oriented cylindrical carrier 24 adapted to operate so as to cut off possible activation of anyone of the mercury switches of the sensing means of the invention, in response to erroneous sensing of bumps or holes in the road. Opposing conductive plates 13 are also provided onto basement 28 adapted to receive the battery 12 providing the energy supply of the device.

One of the advantageous characteristics of the invention is that it includes appropriate means for calibration of the sensing device, so that it may be adjusted into the combination of performance characteristics of different vehicles and into the particular driving habits and skills of individual drivers.

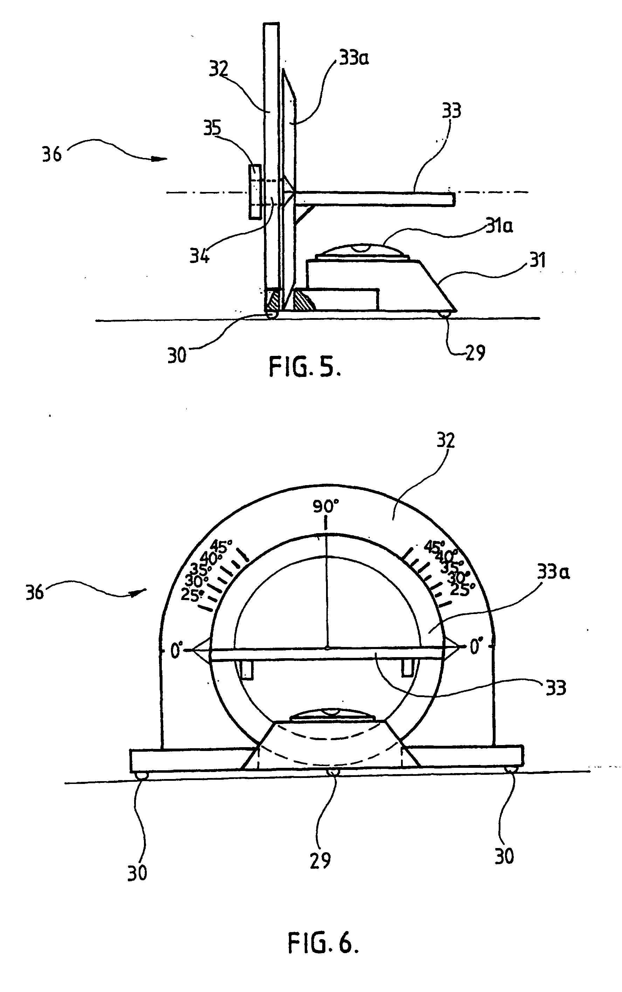

In accordance to a preferred embodiment of the invention, calibration is effected by means of the calibration device 36 depicted in Figs 5 and 6, which comprises a vertically oriented surface 32 adapted to receive a circularly marked scale 33a of degrees. A table 33 whereupon is mounted the device to be calibrated extends perpendicularly from the vertically oriented surface 32, the table 33 being fixedly mounted onto surface 32 by means of bolt and nut assembly 34, 35. A leveling means 31a located onto a body 31 extends, at the bottom of the vertically oriented surface 32, so that the device 36 may be mounted by means of a pair of legs 30 at the bottom of surface 32 and of a leg 29 provided at the bottom of body 31 of the leveling means 31a, these legs being adjustable to obtain optimum level mounting of the calibration device, so as to perform accurate calibration of the device mounted onto the table 33.

When the device of the invention is mounted onto table 33 of the calibration device, the response sensitivity of each one of the abovementioned first and second pairs of mercury switches is adjusted by choosing a corresponding suitable inclination for each one of the mercury switches within an illustrative range of 25°-45°, such as to correspond to the combination of performance characteristics of different motor cars and into the particular driving habits and skills of individual drivers.

The proposed device with the scope of being mounted onto the windscreen of various motor car makes whilst maintaining a desired horizontal orientation, comprises a housing which is split into three independent potions. As shown in Fig. 2, the housing comprises a main portion 1 with a generally rectangular configuration, which is suitably shaped to cover the basement 28 bearing the electrical components of the device, portion 1 being closed with the frontal panel surface 1a and its perpendicularly projecting basement 1b. The main portion 1 of the housing of the invention further comprises a rear cavity 12a with openings 14 on either end thereof, wherein the opposing conductive plates 13 of the battery 12 of the device protrude through the abovementioned openings 14 and the battery 12 sits within this rear cavity 12a, its two poles being in contact with the conductive plates 13. Ventilation holes 11 are also provided on the side surfaces of the main portion 1 of the housing.

In accordance to a preferred embodiment, the device of the invention may be alternatively mounted onto the driving panel and even embodied into a suitable location thereof or mounted onto the windscreen. In the latter case, the device further includes a suspension means portion 2 of the main portion 1 of the housing, the configuration of the suspension means 2 being such as to grip the main portion 1 of the housing and lock onto the same through engagement of an angular front end surface 2a and a rear hook 27 thereof onto corresponding angular recessions 1c on the front surface and recession 26 on the rear bottom surface of the main portion 1 of the housing.

Finally a third housing portion 3 is used in mounting the device onto a suitable location of the vehicle's windscreen. In accordance with an illustrative preferred embodiment, the third housing portion 3 comprises a flat surface 3a with a length corresponding to the width of abovementioned suspension means portion 2 and a pair of parallel oriented side surfaces 3b, 3c projecting perpendicularly from the ends of the flat surface 3a and having longitudinally aligned, opposing holes 5. The third housing portion 3 is rotatably connected to the suspension means portion 2, when the abovementioned parallel oriented side surfaces 3b, 3c thereof come in contact with parallel opposing side surfaces of the suspension means portion 2, which are provided with accordingly longitudinally aligned holes 5a. As holes 5a of the suspension means portion 2 coincide with holes 5 of the abovementioned third housing portion 3, a shaft 4a with a threaded end is longitudinally inserted along these coincident holes 5, 5a, the head 4 of the shaft 4a being stopped at the one side of coincident walls of the thereby assembled suspension means portion 2 and third housing portion 3, whilst the threaded end of the shaft 4a being screwed by means of nut 6, which is being stopped at the other side of coincident walls of portions 2 and 3.

The third housing portion 3 is thus rotatably connected to the suspension means portion 2 which is in turn fixedly connected to the main housing portion 1. Such rotatable connection allows, following mounting of the flat surface 3a onto the windscreen, for the rotation of the assembly of the first housing portion 1 and suspension means portion 2 relative to the fixedly mounted onto the windscreen third housing portion 3, so as to bring the device in a horizontal orientation prior to tightening the nut 6 by means of which the third housing portion eventually becomes fixedly connected to the assembly of housing portions 1 and 2. The abovementioned third housing portion might also be alternatively adhered onto the fixed assembly of the main housing portion 1 and suspension means portion 2 in a way such as to allow rotation of the same, not only with respect to the horizontal, but also with respect to the vertical direction.

It must herein be noted that the invention was presented by reference to illustrative, preferred but not confining embodiments.

## Claims

1. Device for warning drivers of automobiles of excessive speed of turning around a curve, so that they may be alerted in taking remedial measures, comprising sensing means including an arrangement of mercury switches, each one of said switches (18, 19, 20, 21) comprising a cylindrical tube within which is freely reciprocatingly moving a mercury bulb and alarm audio and/or visual signal producing means activated by said switches, the device being **characterized by** that:
it is an autonomous, self-powered, compact device with said sensing means and said audio and/or visual signal producing means being located within one single main housing portion (1) including a rear cavity (12a) for the installation of battery means (12) for providing an independent energy supply for operation of the device and including closure means of a frontal panel surface (1a) extending into a perpendicularly projecting basement (1b);
said sensing means comprising two, alternatively activated and differentially calibrated, pairs of mercury switches, each said pair comprising two oppositely inclined mercury switches for monitoring right and left turns of the vehicle, wherein a first pair of said pairs of mercury switches (18,19) is adapted for use in conditions of dry road surface by calibration of said mercury switches (18,19) at a predetermined value of inclination and a second pair of said pairs of mercury switches (20,21) is adapted for use in conditions of wet road surface by calibration of said mercury switches (20,21) at a different predetermined value of inclination, each one of said mercury switches being fixedly mounted within a lateral cavity of cylindrical carrier means (18a, 19a, 20a, 21a) respectively, said cylindrical carrier means (18a, 19a, 20a, 21a) respectively extending into rotatable knobs (18b, 19b, 20b, 21b), said rotatable knobs being used in the calibration procedure of said mercury switches, and
said device being accompanied with a calibration device (32) for selectively adjusting response sensitivity of each one of said mercury switches (18, 19, 20, 21) into corresponding combination of performance characteristics of different vehicles and particular driving habits and skills of individual drivers.

2. Device for warning drivers of automobiles of excessive speed of turning around a curve, as claimed in above claim 1, **characterized by** that the alternative activation of said first pair of mercury switches (18,19) or said second pair of mercury switches (20,21) is carried out by means of a manually operated switch with an operation lever (9) on said frontal panel surface (1a) and a switch box (9a) at the rear of said frontal panel surface (1a).

3. Device for warning drivers of automobiles of excessive speed of turning around a curve, as claimed in above claim 1, **characterized by** that the alternative activation of said first pair of mercury switches (18,19) or said second pair of mercury switches (20,21) is carried out automatically upon changing of conditions of the road surface in response to activation of the windscreen wipers of the vehicle.

4. Device for warning drivers of automobiles of excessive speed of turning around a curve, as claimed in above claim 1, wherein
upon said frontal panel surface (1a) are located said switch (9) used in the alternative activation of said first pair of mercury switches (18,19) or said second pair of mercury switches (20,21), a switch (10) used to set the device on or off and said rotatable knobs (18b, 19b, 20b, 21b) being used in the calibration procedure of said mercury switches, said knobs (18b, 19b, 20b, 21b) extending to said corresponding carrier means (18a, 19a, 20a, 21a) with said mercury switches (18, 19, 20, 21) at the rear of said frontal panel surface (1a) and wherein
upon said perpendicularly projecting basement (1b) of said frontal panel surface is located a rectangular basement (28) onto which are mounted and wired said alarm audio producing buzzer means (15) sitting onto a vibration absorbing elastic plate (38), a capacitor (22), a mercury switch (23) mounted onto a vertically oriented cylindrical carrier (24) adapted to operate so as to cut off possible activation of anyone of said mercury switches (18, 19, 20, 21) of said sensing means in response to erroneous sensing of bumps or holes in the road and a pair of opposing conductive plates (13) extending through openings (14) of said main housing portion (1) on either end of said rear cavity (12a) thereof for the installation of battery means (12) for providing an independent energy supply for operation of the device.

5. Device for warning drivers of automobiles of excessive speed of turning around a curve, as claimed in above claim 1, wherein said calibration device for selectively adjusting response sensitivity of each one of said mercury switches (18, 19, 20, 21) into corresponding combination of performance characteristics of different vehicles and particular driving habits and skills of individual drivers comprises a vertically oriented surface (32) adapted to receive a circularly marked scale (33a) of degrees, a table (33) whereupon is mounted the device to be calibrated extending perpendicularly from said vertically oriented surface (32), said table (33) being fixedly mounted onto said vertically oriented surface (32) by means of bolt and nut assembly (34, 35), a leveling means (31a) located onto a body (31) extending at the bottom of said vertically oriented surface (32), the calibration device (36) being mounted by means of a pair of legs (30) at the bottom of said vertically oriented surface (32) and of a leg (29) provided at the bottom of said body (31) of the leveling means (31a), said legs being adjustable to obtain optimum level mounting of the calibration device.

6. Device for warning drivers of automobiles of excessive speed of turning around a curve, as claimed in above claim 1, wherein the device is adapted to be mounted onto the driving panel and even embodied into a selected location thereof.

7. Device for warning drivers of automobiles of excessive speed of turning around a curve, as claimed in above claim 1, wherein the device is adapted to be mounted onto the windscreen of the vehicle and for this purpose it further includes a suspension means portion (2) of said main housing portion (1), said suspension means (2) having a configuration such as to grip said main housing portion (1) and lock onto the same to form a fixed assembly through engagement of an angular front end surface (2a) and a rear hook (27) of said suspension means portion (2) onto corresponding angular recessions (1c) on the front surface and recession (26) at the rear bottom surface of said main housing portion (1), a third housing portion (3) being rotatably connected to said suspension means portion (2) and fixedly mounted onto the windscreen, wherein rotation of the assembly of said first housing portion (1) and said suspension means portion (2) in a horizontal and vertical direction relative to the fixedly mounted onto the windscreen said third housing portion (3) allows bringing the device in a horizontal orientation prior to fixedly connecting and locking said third housing portion (3) onto said suspension means portion (2).

## Patentansprüche

1. Vorrichtung für das Warnen der Autofahrern vor übermäßigen Geschwindigkeit der kurve um eine krumme Linie, so daß die Autofahrern aktiviert werden könnten um Wiederaufrichtungsmaßnahmen zu nehmen, welche die aus einem Sinnesmittel besteht, dass das eine Anordnung für Quecksilberschaltern umfasst, wo jeder von den besagten Schaltern (18, 19, 20, 21) aus einer zylinderförmigen Tube, innerhalb dessen die Quecksilberknolle sich frei Hin -und Herbewegt, und aus einem Produktionsmittel für Sonar - oder und Audioalarmsignal besteht, das durch den besagten Schaltern aktiviert werden kann, indem diese Vorrichtung **dadurch gekennzeichnet** wird,
dass sie ein autonome, selbstverpflegte, kompakte Vorrichtung ist, indem das besagte Sinnesmittel und das besagte Produktionsmittel für Sonar ― oder und Audioalarmsignal innerhalb eines einheitlichen Hauptgehäuseteils (1) eingelegt wird, der aus eine hintere Vertiefung besteht (12a), die für die Installation der Batterien (12), für die unabhängige Energieversorgung, für den Betrieb der Vorrichtung bestimmt ist und umfasst auch Deckungsmitteln einer frontalen Rahmenfläche (1a), die senkrecht auf eine Rahmenbasis (1b) sich ausstreckt;
wobei das besagte Sinnesmittel aus zwei alternativ aktivierte und verschieden kalibrierte Paare der Quecksilberschaltern besteht, wo jedes von den besagten Paaren zwei geneigte Quecksilberschalter, die sich entgegengesetzt neigen, enthält, um den rechten und linken Drehkurven des Fahrzeuges zu kontrollieren, wobei ein erstes Paar der besagten Paaren der Quecksilberschaltern (18,19) für den Gebrauch, in Zuständen eines trockenen Pflasters (Strassenbelages) durch Kalibrieren der besagten Quecksilberschaltern, angepaßt wird, an einem vorbestimmten Wert der Neigung und ein zweites Paar von den besagten Paaren der Quecksilberschaltern (20,21), das für den Gebrauch in Zuständen eines feuchten Pflasters (Strassenbelages) durch Kalibrieren der besagten Quecksilberschaltern (20,21) angepasst wird, an einem verschieden vorbestimmten Wert der Neigung, wo jeder von den besagten Quecksilberschaltern innerhalb einer seitlichen Vertiefung Zylinderförmigenträgern, durch dessen Einlegung, festgelegt wird, (18a, 19a, 20a, 21a), indem die Zylinderförmigenträger (18a, 19a, 20a, 21 a) gegenseitig sich in drehbare Drehknöpfen (18b, 19b, 20b, 21 b) enden, wo die besagten drehbaren Drehknöpfen im Kalibrieren-Verfahren der besagten Quecksilberschaltern verwendet werden, und
wobei die besagte Vorrichtung von einer zum Kalibrieren Vorrichtung (32) begleitet wird, mit der die Empfindlichkeitsantwort jedem der besagten Quecksilberschaltern auswählend reguliert wird (18, 19, 20, 21), so dass jede von denen sich mit der entsprechenden Kombination der Leistungsmerkmalen verschiedenartiger Fahrzeugen und der Eigenartigkeiten der Fahrgewohnheiten und der Fähigkeiten der einzelnen Fahrern anpasst.

2. Vorrichtung für das Warnen der Autofahrern vor übermäßigen Geschwindigkeit der kurve um eine krumme Linie, nach Anspruch 1, **dadurch gekennzeichnet daß** die alternative Aktivierung entweder des besagten ersten Paares der Quecksilberschaltern (18, 19) oder des besagten zweitens Paares der Quecksilberschaltern (20, 21) durch einen handbedienten Schalter (9) mit einem Betriebhebel auf die besagte frontale Rahmenfläche (1a) und einem Schalterkasten (9a) an der Rückseite der besagten frontalen Rahmenfläche (1a) durchgeführt wird.

3. Vorrichtung für das Warnen der Autofahrern vor übermäßigen Geschwindigkeit der kurve um eine krumme Linie, nach Anspruch 1, **dadurch gekennzeichnet daß** die alternative Aktivierung entweder des besagten ersten Paares der Quecksilberschaltern (18, 19) oder des besagten zweitens Paares der Quecksilberschalteltern (20, 21) automatisch durchgeführt wird, wenn die Zustände des Pflasters (Straßenbelages) geändert werden, als Antwort auf die Aktivierung der Scheibenwischer des Fahrzeuges.

4. Vorrichtung für das Warnen der Autofahrern vor übermäßigen Geschwindigkeit der kurve um eine krumme Linie, nach Anspruch 1, wobei
auf die besagten frontalen Rahmenfläche (1a) werden eingestellt: der besagte Schalter (9), der in der alternativen Aktivierung entweder des besagten ersten Paares der Quecksilberschaltern (18, 19) oder des besagten zweitens Paares der Quecksilberschaltern (20, 21) benutzt wird, ein Schalter (10), der benutzt wird um die Vorrichtung im Betrieb oder außer Betrieb zu setzen und die drehbaren Knöpfe(18b, 19b, 20b, 21b), die im Kalibrieren-Verfahren der besagten Quecksilberschaltern verwendet werden, wobei die besagte Knöpfe (18b, 19b, 20b, 21 b) auf den besagten Trägern gegenseitig sich ausstrecken (18a, 19a, 20a, 21a) mit den besagten Quecksilberschaltern (18, 19, 20, 21) an der Rückseite der besagten frontalen Rahmenfläche (1a) und wobei
auf die besagte, die sich senkrecht an der besagten frontalen Rahmenfläche ausstreckt, Basis (1b), wird eine rechteckige Basis (28) eingestellt, auf der weiter mit einem elektrischen Kabel eingestellt und zusammengebunden werden: das Produktionsmittel für Sonar und - Audioalarmsignal, ein Beeper (15), der sich an einer elastischen Platte (38) beruht und der die Vibrationen aufsaugt, ein Kondensator (22), ein Quecksilberschalter (23), der auf einen vertikal orientierten zylinderförmigen Träger eingestellt ist (24), und so angepaßt, um zu funktionieren, so dass eine mögliche Aktivierung von irgendeinem von den besagten Quecksilberschaltem (18, 19, 20, 21) des besagten Sinnesmittels zu unterbrechen, wenn diese Aktivierung als fehlerhafte Antwort beim Stöße eines Fahrzeuges in Schwellungen oder Schlaglöchern auf einem Pflaster (Strassenbelag) sich ergibt und ein Paar der von leitfähigen Platten (13), die entgegengestzt liegen und durch Öffnungen (14) des besagten Hauptgehäuseteils (1) an jedem Ende der besagten hinteren Vertiefung (12a) durchgehen, für die Installation der Batterien (12), durch den die unabhängige Energie-Versorgung für den Betrieb der Vorrichtung statt findet.

5. Vorrichtung für das Warnen der Autofahrern vor übermäßigen Geschwindigkeit der Kurve um eine krumme Linie, nach Anspruch 1, wobei die besagte zum Kalibrieren Vorrichtung für ausgewählte Empfindlichkeitsantwort von jeder von den besagten Quecksilberschaltern (18, 19, 20, 21) in entsprechende Kombination der Leistungsmerkmalen der verschiedenen Fahrzeugen und den eigenartigen Fahrgewohnheiten und der Fähigkeiten der einzelnen Fahrern, enthält eine vertikal orientierte Oberfläche (32), die an eine kreisförmig kalibrierende in Grad Maßstäbe (33a) Aufnahme angepasst wird, eine Tischfläche (33), worauf eine Vorrichtung zum Kalibrieren eingestellt wird, wobei die besagte Tischfläche (33) sich senkrecht an vertikal orientierten Oberfläche (32), ausstreckt, wo die besagte Tischfläche (33)stabil an den vertikal orientierten Oberfläche (32) befestigt wird mit Hilfe einer Anlage von Schraube und Schraubenmutter (34-35), ein Nivellierensmittel (31a), das sich auf einem Körper (31) befindet, dass es an dem unteren Punkt der besagten vertikal orientierten Oberfläche (32)sich ausstreckt, wobei die zum Kalibrieren Vorrichtung (36) mit Hilfe eines Beinepaares (30) am unteren Punkt der besagten vertikal orientierten Oberfläche (32) und eines Beines (29), der am unteren Punkt des besagten Körpers (31) des Nivellierensmittels (31a) gewährt wird, sich beruht, wo die besagte Beine, die Möglichkeit haben reguliert zu werden, so dass die Beste horizontale Regulierung der zum Kalibrieren Vorrichtung erreicht werden kann.

6. Vorrichtung für das Warnen der Autofahrern vor übermäßigen Geschwindigkeit der Kurve um eine krumme Linie, nach Anspruch 1, wobei die Vorrichtung so angepaßt wird, dass sie auf das Fahrarmaturenbrett eingestellt werden kann oder und in einem vorgewählten Einbauort auf den Armaturenbrett einverleibt werden zu können.

7. Vorrichtung für das Warnen der Autofahrern vor übermäßigen Geschwindigkeit der Kurve um eine krumme Linie, nach Anspruch 1, wobei die Vorrichtung so angepaßt wird, dass sie auf die Windschutzscheibe des Fahrzeuges eingestellt werden kann und zu diesem Zweck umfasst sie weiter einen Aufhebungmittelteil (2) des besagten Hauptgehäuseteils (1), welcher eine solche Morphologie hat, um den besagten Hauptgehäuseteil (1) zu umfassen und auf denselben sich stabil zu verriegeln, so dass eine stabile Einheit des Gehäuses (1) im Aufhebungsmittel (2) gebildet werden kann, durch die Einflechtung einer eckigen vorderen Oberfläche (2a), und eines hinteren Hakens (27) des besagten Aufhebungmittels (2) auf entsprechend eckige Höhlungen **(1c)** auf der vorderen Oberfläche und der Höhlung (26) an der hinteren Grundfläche des besagten Hauptgehäuseteils (1), indem ein dritter Gehäuseteil (3) drehbar mit dem besagten Aufhebungmittel (2) sich verbindet, und stabil sich auf den Windschutzscheibe befestigt, wo die Gemeinsame Umdrehung der zusammengefügten des besagten ersten Gehäuseteils (1) und des besagten Aufhebungmittels (2) in einer horizontalen und vertikalen Richtung im Verhältnis eines stabil eingesetzten auf den Windschutzscheibe besagten dritten Gehäuseteils (3) erlaubt die Vorrichtung in einer horizontalen Orientierung zu sein bevor eine stabile Verbindung und Verschließung des besagten dritten Gehäuseteils (3) auf die besagte Aufhebung (2) statt findet.

## Revendications

1. L'appareil d'avertissement aux conducteurs d'automobiles relatif à 1a vitesse excessive lors d'un virage autour d'une courbe, lequel appareil fonctionne, de sorte qu'ils puissent être alertés en prenant des mesures remédiables, lequel appareil comprend un moyen sensitif lequel comprend une installation de commutateurs de mercure, où chacun desdits commutateurs (18, 19, 20, 21) comporte un tube cylindrique dans lequel se déplace librement d'une manière reciproque une ampoule en mercure et un moyen de production du signal alerte audio ou/et du signal alerte visuel qui est activé par lesdits commutateurs, lequel appareil **caractérisé en ce que**:
il est un appareil autonome, autoalimenté, compact dans lequel ledit moyen sensitif et ledit moyen de production du signal alerte audio ou/et du signal alerte visuel sont fixés à l'intérieur d'une unique partie principale du boîtier (1) comprenant une cavité arrière (12a) pour l'installation des accumulateurs (12) pour l'approvisionnement indépendant en énergie pour le fonctionnement de l'appareil et comporte un moyen de couverture d'une surface frontale du plateau (1a) s'étendant perpendiculairement sur une base (1b);
où ledit moyen sensitif comporte deux paires de commutateurs de mercure alternativement activés et autrement calibrés, où chacune desdites paires comporte deux commutateurs de mercure dans une inclinaison inverse pour contrôler les virages à gauche et à droite du véhicule, où une première paire desdites paires de commutateurs de mercure (18, 19) est ajustée pour l'usage pendant les conditions sèches de la chaussée à travers le calibrage desdits commutateurs de mercure (18, 19) à une valeur prédéterminée de l'inclinaison et une seconde paire desdites paires de commutateurs de mercure (20, 21) est ajustée pour l'usage pendant les conditions humides de la chaussée à travers le calibrage desdits commutateurs de mercure (20, 2 1 ) à une valeur prédéterminée différente de l'inclinaison, où chacun desdits commutateurs de mercure étant monté respectivement d'une manière fixe dans une cavité latérale des ports cylindriques (18a, 19a, 20a, 21a), lesdits ports cylindriques (18a, 19a, 20a, 21a) s'étendent respectivement aux boutons rotatifs (18b, 19b, 20b, 21b), où lesdits boutons rotatifs sont utilisés dans la procédure de calibrage desdits commutateurs de mercure, et
où ledit appareil est accompagné d'un appareil de calibrage (32) avec lequel est réglé sélectivement la sensibilité de réaction de chacun desdits commutateurs de mercure (18, 19, 20, 21) afin qu'elle corresponde avec la combinaison respective des caractéristiques de performance des différents véhicules et habitudes et aptitudes particulières de conduite des différents conducteurs.

2. L'appareil d'avertissement aux conducteurs d'automobiles de la vitesse excessive lors d'un virage autour d'une courbe, selon la revendication 1 ci-dessus, **caractérisé en ce que** l'activation alternative soit de ladite première paire des commutateurs de mercure (18, 19) soit de ladite seconde paire des commutateurs de mercure (20, 21) est effectuée avec l'aide d'un commutateur manuel (2) avec un levier de fonctionnement sur ladite surface frontale du plateau (1a) et d'un boîtier des commutateurs (9a) à la partie arrière de ladite surface frontale du plateau (la).

3. L'appareil d'avertissement aux conducteurs d'automobiles de la vitesse excessive lors d'un virage autour d'une courbe, selon la Revendication 1 ci-dessus, **caractérisé en ce que** l'activation alternative soit de ladite première paire des commutateurs de mercure (18, 19) ou de ladite seconde paire des commutateurs de mercure (20, 21) est effectuée automatiquement juste après le changement des conditions de la surface de la chaussée en réponse à l'activation des essuie-glaces du véhicule.

4. L'appareil d'avertissement aux conducteurs d'automobiles de la vitesse excessive lors d'un virage autour d'une courbe, selon la Revendication 1 ci-dessus, où
au-dessus de ladite surface frontale du plateau (1a) sont placés ledit commutateur (9) qui est utilisé dans l'activation alternative soit de ladite première paire des commutateurs de mercure (18, 19) soit de ladite seconde paire des commutateurs de mercure (20, 21), un commutateur (10) qui est utilisé pour activer ou désactiver l'appareil et lesdits boutons rotatifs (18b, 19b, 20b, 21 b) qui sont utilisés dans la procédure de calibrage desdits commutateurs de mercure, où lesdits boutons (18b, 19b, 20b, 21b) s'étendent auxdits ports correspondants (18a, 19a, 20a, 21a) avec lesdits commutateurs de mercure (18, 19, 20, 21) à la partie arrière de ladite surface frontale du plateau (1a) et où
au-dessus de ladite base (1b), perpendiculairement étendue vers ladite surface frontale du plateau, est montée une base rectangulaire (28) au-dessus de laquelle sont placés et reliés avec un conduit électrique ledit moyen de production du signal alerte audio lequel est une alarme (15) laquelle est posée sur une plaque élastique (38) qui absorbe les vibrations, un condensateur (22), un commutateur de mercure (23) placé au-dessus d'un porteur cylindrique verticalement orienté (24) qui est ajusté pour fonctionner afin de stopper la possible activation par quelconque desdits commutateurs de mercure (18, 19, 20, 21) dudit moyen sensitif tant que cette activation s'ensuit comme une réplique incorrecte à la secousse du véhicule sur les dunes ou les trous de la chaussée et d'une paire de plaques conductrices (13) qui sont placées l'une en face de l'autre entre les ouvertures (14) des extrémités de ladite cavité arrière (12a) pour l'installation des accumulateurs (12) dans ladite partie principale du boîtier (1) où avec lesquels accumulateurs s'octroie l'approvisionnement indépendant en énergie pour le fonctionnement de l'appareil.

5. L'appareil d'avertissement aux conducteurs des automobiles de la vitesse excessive lors d'un virage autour d'une courbe, selon la Revendication 1 ci-dessus, où ledit appareil de calibrage pour l'ajustement sélectif de la sensibilité de réaction de chacun desdits commutateurs de mercure (18, 19, 20, 21) dans la combinaison correspondante des caractéristiques de performance de différents véhicules et habitudes de conduite et des aptitudes particulières des différents conducteurs comporte une surface verticalement orientée (32) qui est ajustée pour la réception d'un cadran circulairement graduée (33a), une surface (33) sur laquelle est placé l'appareil qui doit être calibré, où la dite surface (33) s'étend sur la surface verticalement orientée (32), où ladite surface (33) est liée d'une manière fixe sur la surface verticalement orientée (32) à l'aide du montage d'un boulon et d'un écrou (34, 35), un moyen de mise à niveau (3 1a) qui se trouve au-dessus d'un corps (3 1) s'étendant au-dessous de la surface verticalement orientée (32), où l'appareil de calibrage (36) est monté à l'aide d'une paire de pieds (30) au-dessous de la surface verticalement orientée (32) et d'un pied (29) pourvu au-dessous dudit corps (31) du moyen de mise à niveau (31a), où lesdits pieds ont la possibilité d'être réglés afin d'obtenir le meilleur réglage horizontal de l'appareil de calibrage.

6. L'appareil d'avertissement aux conducteurs d'automobiles de la vitesse excessive lors d'un virage autour d'une courbe, selon la Revendication 1 ci-dessus, où l'appareil est ajusté pour être placé au-dessus du tableau de bord du véhicule ou pour être incorporé dans un endroit choisi sur le tableau.

7. L'appareil d'avertissement aux conducteurs d'automobiles de la vitesse excessive lors d'un virage autour d'une courbe, selon la Revendication 1 ci-dessus, où l'appareil est ajusté pour qu'il soit placé sur le pare-brise du véhicule et c'est pour cette raison qu'il comprend en plus une partie de moyen de suspension (2) dudit boîtier principal (1), lequel moyen a une telle configuration afin d'envelopper ledit boîtier principal (1) et d'assurer d'une manière fixe afin de former une cohérence constante du boîtier (1) au moyen de montage (2) à travers l'enchevêtrement d'une surface angulaire frontale (2a) et d'un crochet arrière (27) dudit moyen de suspension (2) sur les saillies angulaires correspondantes (1c) sur la surface frontale et d'une saillie (26) au-dessous en arrière de ladite partie principale du boîtier (1), où une troisième partie du boîtier (3) est rotativement connectée avec ledit moyen de suspension (2) et solidement fixée au-dessus de la pare-brise, où la rotation commune des ajustements de ladite première partie du boîtier (1) et dudit moyen de suspension (2) dans une direction horizontale et verticale en relation avec la troisième partie du boîtier placée au-dessus de la pare-brise (3) laissant placé l'appareil dans une orientation horizontale avant la liaison et la sécurisation de la troisième partie du boîtier (3) sur ladite partie du moyen de suspension (2).
